(19) Europäisches Patentamt
European Patent Office
Office européen des brevets

(11) EP 4 723 194 A1

# (12) EUROPEAN PATENT APPLICATION
published in accordance with Art. 153(4) EPC

(43) Date of publication:
**08.04.2026 Bulletin 2026/15**

(21) Application number: **24815161.5**

(22) Date of filing: **13.05.2024**

(51) International Patent Classification (IPC):
***H01M 4/131*** *(2010.01)* ***H01M 4/36*** *(2006.01)*
***H01M 4/505*** *(2010.01)* ***H01M 4/525*** *(2010.01)*
***H01M 4/62*** *(2006.01)*

(52) Cooperative Patent Classification (CPC):
Y02E 60/10

(86) International application number:
**PCT/JP2024/017560**

(87) International publication number:
**WO 2024/247677 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023088160**

(71) Applicant: **Panasonic Intellectual Property Management Co., Ltd.**
**Kadoma-shi, Osaka 571-0057 (JP)**

(72) Inventors:
- **MINEGISHI, Shuya**
  **kadoma-shi, Osaka 571-0057 (JP)**
- **UKA, Youichirou**
  **kadoma-shi, Osaka 571-0057 (JP)**
- **OKAZAKI, Tomohisa**
  **kadoma-shi, Osaka 571-0057 (JP)**
- **KAWAKITA, Akihiro**
  **kadoma-shi, Osaka 571-0057 (JP)**
- **OGASAWARA, Takeshi**
  **kadoma-shi, Osaka 571-0057 (JP)**

(74) Representative: **Novagraaf International SA**
**Chemin de l'Echo 3**
**1213 Onex, Geneva (CH)**

## (54) POSITIVE ELECTRODE FOR NONAQUEOUS ELECTROLYTE SECONDARY BATTERY, AND NONAQUEOUS ELECTROLYTE SECONDARY BATTERY

(57) A positive electrode (11) for a nonaqueous electrolyte secondary battery according to one embodiment of the present disclosure is characterized by comprising, as a positive electrode mixture layer, a positive electrode active material and an electroconductive auxiliary agent, and is characterized in that: the positive electrode active material includes a lithium-containing transition metal composite oxide having a layered structure, and a sulfonic acid compound which is present on the surfaces of the particles of lithium-containing transition metal composite oxide; the sulfonic acid compound is represented by formula (I); and the electroconductive auxiliary agent includes at least one selected from the group consisting of carbon nanotubes having an average diameter of 20 nm or less, carbon black, and graphene having an average thickness of 50 nm or less. (In the formula, A represents a Group 1 element or a Group 2 element, R represents a hydrocarbon group, and n is 1 or 2.)

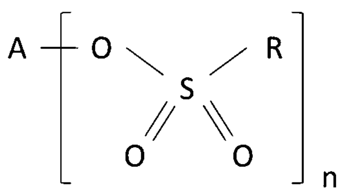

(I)

EP 4 723 194 A1

Figure 1

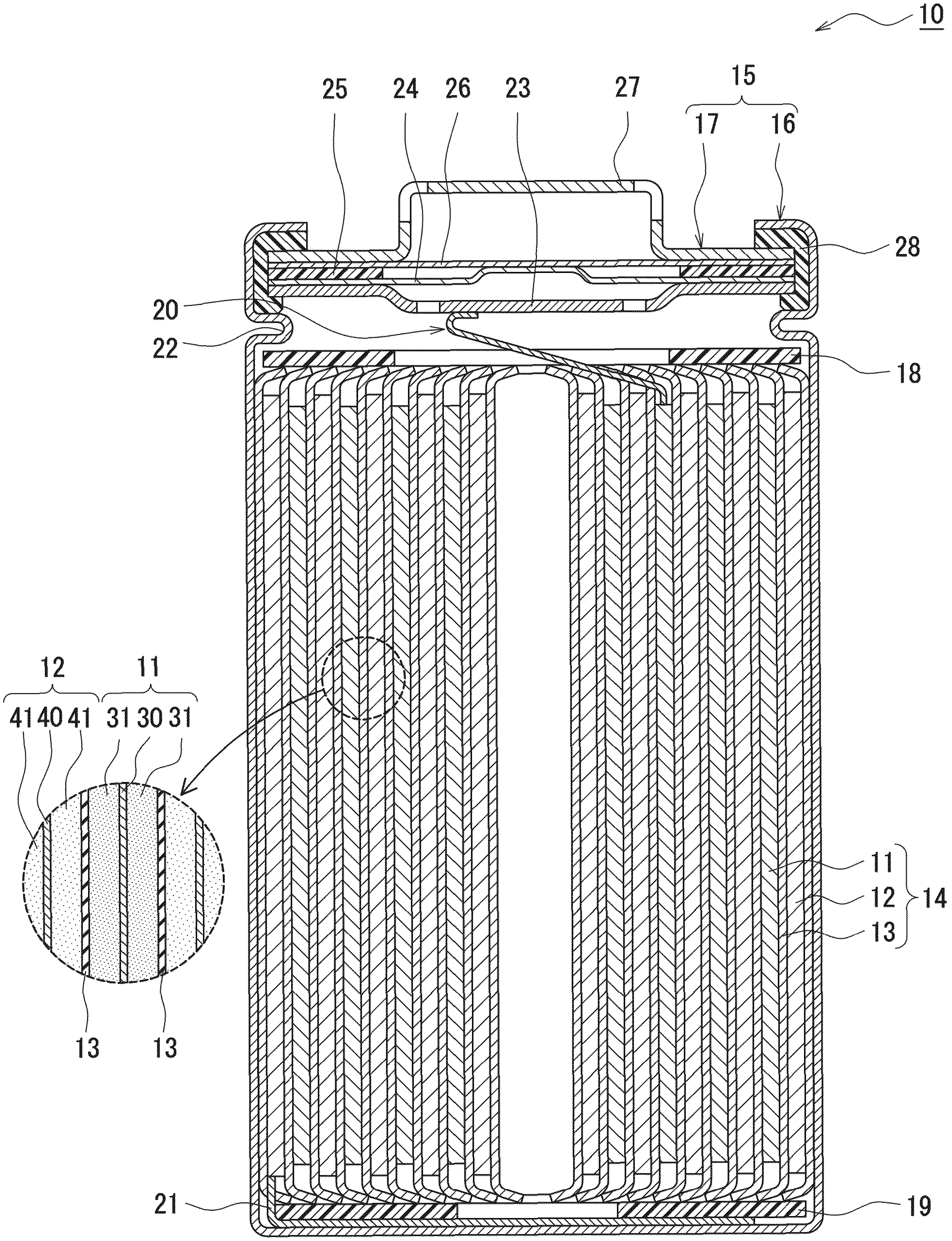
10
25
24
26
23
27
15
17
16
28
20
22
18
12
11
41 40 41
31 30 31
13
13
11
12
13
14
21
19

## Description

TECHNICAL FIELD

The present disclosure relates to a positive electrode for a non-aqueous electrolyte secondary battery and a non-aqueous electrolyte secondary battery using the positive electrode.

BACKGROUND ART

In recent years, applications of non-aqueous electrolyte secondary batteries have expanded to power sources for electric vehicles and power storage devices for utilizing renewable natural energy. Since positive electrodes significantly affect battery characteristics, such as battery capacity, output characteristics, and cycle characteristics, many studies have been made on the positive electrode. For example, Patent Literature 1 discloses a positive electrode for a non-aqueous electrolyte secondary battery using a lithium-containing transition metal composite oxide with low soluble Li salts scattered on the surface as a positive electrode active material for the purpose of reducing the reaction resistance when stored at high temperatures.

CITATION LIST

PATENT LITERATURE

PATENT LITERATURE 1: Japanese Unexamined Patent Application Publication No. 2019-169286

SUMMARY

In non-aqueous electrolyte secondary batteries, it is an important object to improve cycle characteristics during high-rate charging while improving output characteristics. Conventional techniques described in Patent Literature 1 have not sufficiently achieved this object, and there is still much room for improvement.

The positive electrode for a non-aqueous electrolyte secondary battery in one aspect of the present disclosure is a positive electrode for a non-aqueous electrolyte secondary battery, having a positive electrode core and a positive electrode mixture layer formed on a surface of the positive electrode core, wherein the positive electrode mixture layer includes a positive electrode active material and a conductive auxiliary agent; the positive electrode active material includes a lithium-containing transition metal composite oxide having a layered structure, and a sulfonate compound present on surfaces of particles of the lithium-containing transition metal composite oxide; the sulfonate compound is a compound represented by formula (1); and the conductive auxiliary agent includes at least one selected from the group consisting of carbon nanotubes, carbon black and graphene, the carbon nanotubes and carbon black each having an average diameter of less than or equal to 20 nm and the graphene having an average thickness of less than or equal to 50 nm,

[Formula 1]

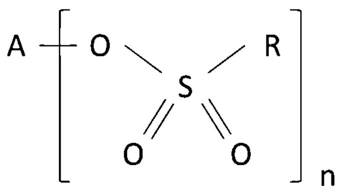

( I )

wherein A represents a group I or group II element, R represents a hydrocarbon group, and n represents 1 or 2.

The non-aqueous electrolyte secondary battery in one aspect of the present disclosure comprises the positive electrode, a negative electrode, and a non-aqueous electrolyte.

According to the positive electrode for a non-aqueous electrolyte secondary battery in one aspect of the present disclosure, a non-aqueous electrolyte secondary battery having improved cycle characteristics during high-rate charging while having improved output characteristics can be provided.

BRIEF DESCRIPTION OF DRAWING

FIG. 1 is a view schematically illustrating an axial cross-section of a non-aqueous electrolyte secondary battery

(cylindrical battery) as an example of an embodiment.

DESCRIPTION OF EMBODIMENTS

As described above, it is an important object to improve output characteristics of non-aqueous electrolyte secondary batteries. As a result of studies conducted by the present inventors, it has been revealed that a non-aqueous electrolyte secondary battery with improved output characteristics can be realized by allowing the sulfonate compound represented by formula (I) above to be present on the surfaces of the particles of the lithium-containing transition metal composite oxide to be used as the positive electrode active material. Presumably because the function of the sulfonate compound facilitates the insertion and extraction of Li, thereby reducing the reaction resistance in the positive electrode.

However, the presence of the sulfonate compound on the particle surfaces reduces the electronic conductivity of the lithium-containing transition metal composite oxide, resulting in insufficient formation of conductive paths when using commonly used conductive auxiliary agent such as carbon black. As a result, the mixture resistance of the positive electrode increases, potentially deteriorating the cycle characteristics during high-rate charging. Therefore, the present inventors have conducted extensive studies to solve the problem and found that a combination of conductive auxiliary agents having special microstructures can improve cycle characteristics during high-rate charging while reducing the reaction resistance of the positive electrode.

Hereinafter, one aspect of an embodiment of the positive electrode for a non-aqueous electrolyte secondary battery, and a nonaqueous electrolyte secondary battery using the positive electrode according to the present disclosure will be described in detail with reference to the drawings. Note that the scope of the present disclosure includes a form composed of selective combination of constituents of a plurality of embodiments and modified examples described below.

Hereinafter, a cylindrical battery including a wound electrode assembly 14 accommodated in a bottomed cylindrical outer case 16 will be illustrated as the non-aqueous electrolyte secondary battery, but the outer case of the battery is not limited to a cylindrical outer case. The non-aqueous electrolyte secondary battery according to the present disclosure may be, for example, a rectangular battery comprising a rectangular outer case, a coin-type battery comprising a coin-shaped outer case, or a pouch battery comprising an outer case constituted by a laminated sheet including a metal layer and a resin layer. The electrode assembly is not limited to the wound-type, and may be a laminate electrode assembly in which a plurality of positive electrodes and a plurality of negative electrodes are alternately stacked one by one via separators. In addition, the design of the non-aqueous electrolyte secondary battery according to the present disclosure is not limited to the design of the illustrated non-aqueous electrolyte secondary battery, and a known non-aqueous electrolyte secondary battery design may be applied.

FIG. 1 is an axial sectional view of a cylindrical non-aqueous electrolyte secondary battery 10 as an example of an embodiment. As shown in FIG. 1, the non-aqueous electrolyte secondary battery 10 comprises a wound electrode assembly 14, a non-aqueous electrolyte, and an outer case 16 that houses the electrode assembly 14 and the non-aqueous electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The two separators 13 are, for example, disposed so as to sandwich the positive electrode 11. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the

battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode 11 will be described in detail.

[Positive Electrode]

The positive electrode 11 has a positive electrode core 30 and a positive electrode mixture layer 31 formed on the surface of the positive electrode core 30. The positive electrode mixture layer 31 is preferably formed on both the surfaces of the positive electrode core 30. As the positive electrode core 30, a foil of a metal that is stable in the potential range of the positive electrode 11, such as aluminum or an aluminum alloy, and a film with the metal disposed on the surface layer, or the like can be used. The thickness of the positive electrode core 30 is, for example, greater than or equal to 10 μm and less than or equal to 30 μm.

The positive electrode mixture layer 31 includes, for example, a positive electrode active material, a conductive auxiliary agent, and a binder. The positive electrode mixture layer 31 is preferably provided on both the surfaces of the positive electrode core 30, excluding a portion to which the positive electrode lead 20 is connected. The positive electrode 11 can be produced, for example, by applying a positive electrode mixture slurry including a positive electrode active material, a binder, and a conductive auxiliary agent to the surface of the positive electrode core 30, drying the coating, and then compressing the dried coating to form the positive electrode mixture layer 31 on both the surfaces of the positive electrode core 30.

The basis weight of the positive electrode mixture layer 31 is, for example, greater than or equal to 250 $g/m^2$. In this case, it is possible to remarkably exhibit the effect of the present disclosure while achieving high capacity of the non-aqueous electrolyte secondary battery. From the viewpoint of increasing the capacity of a battery, the basis weight of the positive electrode mixture layer 31 may be greater than or equal to 300 $g/m^2$ or greater than or equal to 350 $g/m^2$. The upper limit of the basis weight of the positive electrode mixture layer 31 is, for example, 600 $g/m^2$ from the viewpoint of cycle characteristics. Thus, one example of a preferred range for the basis weight of the positive electrode mixture layer 31 is greater than or equal to 250 $g/m^2$ and less than or equal to 600 $g/m^2$. The thickness of the positive electrode mixture layer 31 is greater than or equal to 10 μm and less than or equal to 200 μm, for example, on one side of the positive electrode core 30.

The positive electrode 11 includes a lithium-containing transition metal composite oxide as a positive electrode active material. The lithium-containing transition metal composite oxide includes, for example, secondary particles each formed by aggregation of primary particles. The particle diameter of the primary particles forming the secondary particles of the lithium-containing transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles of the lithium-containing transition metal composite oxide is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles of the lithium-containing transition metal composite oxide can be measured using a laser diffraction particle size distribution measuring device (e.g., MT3000II, manufactured by MicrotracBEL Corp.), with water used as the dispersion medium.

The lithium-containing transition metal composite oxide, for example, has a layered structure. Examples of the layered structures of the lithium-containing transition metal composite oxide include a layered structure belonging to the space group R-3m and a layered structure belonging to the space group C2/m. From the viewpoint of high capacity,

stability of the crystal structure, and the like, the lithium-containing transition metal composite oxide preferably has a layered structure belonging to the space group R-3m. The layered structure of the lithium-containing transition metal composite oxide may include a transition metal layer and a Li layer.

The lithium-containing transition metal composite oxide contains greater than or equal to 50 mol% of Ni relative to the total molar amount of metal elements excluding Li, and one or more elements selected from the group consisting of Co, Mn, and Al.

The content ratio of Ni in the lithium-containing transition metal composite oxide is greater than or equal to 50 mol% relative to the total molar amount of metal elements excluding Li. Thus, the battery capacity can be increased. The content ratio of Ni may be greater than or equal to 75 mol%, greater than or equal to 80 mol%, preferably greater than or equal to 85 mol%, and more preferably greater than or equal to 90 mol%. From the viewpoint of stability of the structure, the content ratio of Ni is preferably less than or equal to 99 mol%, and more preferably less than or equal to 95 mol%.

The content ratio of Co in the lithium-containing transition metal composite oxide is greater than or equal to 0 mol% and less than or equal to 15 mol% relative to the total molar amount of metal elements excluding Li, and Co is an optional component. In other words, the lithium-containing transition metal composite oxide may not contain Co. The lithium-containing transition metal composite oxide may improve the heat resistance of the battery by containing Co.

The content ratio of Mn in the lithium-containing transition metal composite oxide is greater than or equal to 0 mol% and less than or equal to 50 mol%, and Mn is an optional component relative to the total molar amount of metal elements excluding Li. In other words, the lithium-containing transition metal composite oxide may not contain Mn. The lithium-containing transition metal composite oxide may stabilize the crystal structure by containing Mn.

The content ratio of Al in the lithium-containing transition metal composite oxide is greater than or equal to 0 mol% and less than or equal to 15 mol% relative to the total molar amount of metal elements excluding Li, and Al is an optional component. In other words, the lithium-containing transition metal composite oxide may be free of Al.

The total content ratio of Co, Mn, and Al in the lithium-containing transition metal composite oxide is, for example, greater than or equal to 0 mol% and less than or equal to 50 mol%.

The lithium-containing transition metal composite oxide may further include one or more elements selected from the group consisting of W, Mg, Mo, Nb, Ti, Si, Ca, Sr, and Zr. The content ratio of each of W, Mg, Mo, Nb, Ti, Si, Ca, Sr, and Zr in the lithium-containing transition metal composite oxide is, for example, greater than or equal to 0 mol% and less than or equal to 1 mol% relative to the total molar amount of metal elements excluding Li. The total content ratio of W, Mg, Mo, Nb, Ti, Si, Ca, Sr, and Zr is, for example, greater than or equal to 0 mol% and less than or equal to 2 mol%.

The lithium-containing transition metal composite oxide may be, for example, a composite oxide represented by the general formula $Li_xNi_aM1_bM2_cO_{2-y}$, wherein $0.8 < x < 1.2$, $0.5 \leq a$, $0 \leq b \leq 0.5$, $0 \leq c \leq 0.02$, $0 \leq y < 0.05$, $a + b + c = 1$, M1 represents one or more elements selected from the group consisting of Co, Mn, and Al, and M2 represents one or more elements selected from the group consisting of W, Mg, Mo, Nb, Ti, Si, Ca, Sr, and Zr.

The content ratio of elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like.

A sulfonate compound represented by formula (I) is present on the surfaces of the particles of the lithium-containing transition metal composite oxide:

[Formula 2]

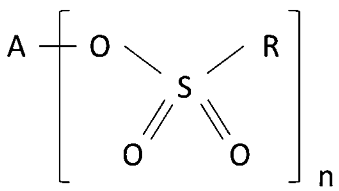

(I)

wherein A represents a group I or group II element, R represents a hydrocarbon group, and n represents 1 or 2. A preferably represents a group I element. Especially, Li or Na is more preferable, and Li is particularly preferable. The sulfonate compound may be scattered so as to cover at least a part of the surfaces of the secondary particles of the lithium-containing transition metal composite oxide or may be present so as to cover the entire surface of the secondary particles. The sulfonate compound may be fixed to the surfaces of the primary particles of the lithium-containing transition metal composite oxide.

In formula (I), R preferably represents an alkyl group. The number of carbon atoms in the alkyl group is preferably less than or equal to 5, and more preferably less than or equal to 3. From the viewpoint of reducing the reaction resistance and the like, a preferred example of R is an alkyl group having less than or equal to 3 carbon atoms, and especially, R preferably represents a methyl group. Note that a part of carbon-bonded hydrogens in R may be substituted with fluorine. In

addition, n in formula (I) is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Especially, at least one selected from the group consisting of lithium methanesulfonate, lithium ethanesulfonate, and sodium methanesulfonate is preferable, and lithium methanesulfonate is particularly preferable.

The sulfonate compound reduces the reaction resistance in the positive electrode 11. Accordingly, the output characteristics of the battery can be improved. Although the sulfonate compound exerts the effect even in an extremely small amount, the amount of the sulfonate compound present on the surfaces of the particles of the lithium-containing transition metal composite oxide is preferably greater than or equal to 0.1 mass%, and more preferably greater than or equal to 0.3 mass%, relative to the mass of the lithium-containing transition metal composite oxide. From the viewpoint of cycle characteristics, the amount of the sulfonate compound present on the surfaces of the particles of the lithium-containing transition metal composite oxide is preferably less than or equal to 1.0 mass%, and more preferably less than or equal to 0.8 mass%, relative to the mass of the lithium-containing transition metal composite oxide. Thus, the amount of the sulfonate compound is preferably greater than or equal to 0.1 mass% and less than or equal to 1.0 mass%, and more preferably greater than or equal to 0.3 mass% and less than or equal to 0.8 mass%, relative to the mass of the lithium-containing transition metal composite oxide.

The presence of the sulfonate compound on the surfaces of the particles of the lithium-containing transition metal composite oxide can be confirmed by Fourier transform infrared spectroscopy (FT-IR). In an infrared absorption spectrum obtained by FT-IR, the positive electrode active material including lithium methanesulfonate, for example, have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are peaks caused by SO stretching vibration derived from lithium methanesulfonate. The peak near 785 $cm^{-1}$ is an peak caused by CS stretching vibration derived from lithium methanesulfonate. In addition, the presence of a positive electrode active material including a sulfonate compound other than lithium methanesulfonate can be confirmed from the absorption peak derived from the sulfonate compound in the infrared absorption spectrum.

The presence of the sulfonate compound can also be confirmed by X-ray photoelectron spectroscopy (XPS). In the spectrum obtained by XPS, the positive electrode active material including lithium methanesulfonate exhibits a peak with a binding energy in the vicinity of greater than or equal to 165 eV and less than or equal to 170 eV and an intensity (c/s) of greater than or equal to 200 and less than or equal to 1000. The presence of the sulfonate compound on the surfaces of the secondary particles of the lithium-containing transition metal composite oxide can be confirmed by ICP, atomic absorption spectrometry, radiation XRD measurement, TOF-SIMS, H-NMR, or the like.

On the surface of the secondary particles of the lithium-containing transition metal composite oxide, a metal compound may be present in addition to the sulfonate compound. The metal compound includes, for example, one or more metal elements selected from the group consisting of Sr, Ca, W, Zr, rare earths, and Al. Examples of the Sr-containing compound include SrO, $Sr(OH)_2$, and $SrCO_3$. Examples of the compound containing Ca include CaO, $Ca(OH)_2$, and $CaCO_3$. Examples of the compound containing W include $WO_3$. Examples of the compound containing Al include $Al_2O_3$. Examples of the Zr-containing compound include $ZrO_2$, $Zr(OH)_4$, $Zr(CO_3)_2$, and $Zr(SO_4)_2 \cdot 4H_2O$. Examples of the compound containing rare-earth include oxides, hydroxides, carbonates, sulfates, nitrates, and phosphates of rare earths. The metal compound may contain a plurality of these metal elements, and examples thereof include $SrAlO_4$, and $CaAlO_4$. The metal compound may further contain Li, and examples thereof include lithium tungstate.

A non-metal compound may be present on the surfaces of the lithium-containing transition metal composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

The positive electrode active material as an example of an embodiment can be produced by the method described below. Note that the production method described herein is merely an example, and the production method of the positive electrode active material is not limited to this method.

The production process of the positive electrode active material includes a synthesis step of obtaining a lithium-containing transition metal composite oxide, a washing step of washing the fired product with water and dehydrating the washed product to obtain a cake-like composition, a drying step of drying the cake-like composition to obtain a powder-like composition, and an addition step of adding at least one of the group consisting of a sulfonate compound and a sulfonic acid solution to the cake-like composition or the powder-like composition.

In the synthesis step, for example, a metal oxide containing greater than or equal to 50 mol% of Ni, greater than or equal to 0 mol% and less than or equal to 15 mol% of Co, greater than or equal to 0 mol% and less than or equal to 50 mol% of Mn, greater than or equal to 0 mol% and less than or equal to 15 mol% of Al, and greater than or equal to 0 mol% and less than or equal to 2 mol% of M2 (where M2 represents one or more elements selected from W, Mg, Mo, Nb, Ti, Si, Ca, Sr, and Zr) and a Li compound are mixed to obtain a mixture.

The metal oxide can be obtained, for example, by adding an alkaline solution such as sodium hydroxide dropwise while stirring a solution of a metal salt including Ni and an arbitrary metal element (Co, Mn, Al, M2, etc.), adjusting the pH to

the alkaline side (e.g., greater than or equal to 8.5 and less than or equal to 12.5), thereby precipitating (coprecipitating) a composite hydroxide including Ni and an arbitrary metal element, and heat-treating the composite hydroxide. The heat treatment temperature is not particularly limited, but is in the range of, for example, greater than or equal to 250°C and less than or equal to 600°C.

Examples of the Li compounds include $Li_2O_3$, LiOH, $Li_2O_2$, $Li_2O$, $LiNO_3$, $LiNO_2$, $Li_2SO_4$, $LiOH{\cdot}H_2O$, LiH, and LiF. The mixing ratio of the metal oxide and the Li compound is preferably such that the molar ratio between the total amount of metal elements in the metal oxide and Li is in the range of greater than or equal to 1:0.8 and less than or equal to 1:1.2, and more preferably greater than or equal to 1:1.0 and less than or equal to 1:1.1, from the viewpoint of facilitating the adjustment of the parameters to the defined ranges.

Next, the synthesis step includes a firing step of firing the obtained mixture. The firing step is, for example, a multi-stage firing step including at least a first firing step of firing the mixture at greater than or equal to 300°C and less than or equal to 680°C in an oxygen stream and a second firing step of firing a fired product obtained in the first firing step at a temperature exceeding 680°C in an oxygen stream. In the first firing step, the temperature is increased to a first set temperature of less than or equal to 680°C at a first temperature rising rate of greater than or equal to 0.2°C/min and less than or equal to 4.5°C/min. In the second firing step, the temperature is increased to a second set temperature of less than or equal to 900°C at a temperature rising rate of greater than or equal to 0.5°C/min and less than or equal to 3.5°C/min. Note that a plurality of first and second temperature rising rates may be set for each temperature region as long as the first and second temperature rising rates are within the above-defined ranges.

The holding time of the first set temperature in the first firing step is preferably less than or equal to 5 hours, and more preferably less than or equal to 3 hours. The holding time of the first set temperature refers to the duration during which the first set temperature is maintained after reaching the first set temperature, and the holding time may be zero. The holding time of the second set temperature in the second firing step is preferably greater than or equal to 1 hour and less than or equal to 10 hours, and more preferably greater than or equal to 1 hour and less than or equal to 5 hours. The holding time of the second set temperature refers to the duration during which the second set temperature is maintained after reaching the second set temperature. The firing of the mixture is performed, for example, in an oxygen stream with an oxygen concentration of greater than or equal to 60%, and the flow rate of the oxygen stream is greater than or equal to 0.2 mL/min and less than or equal to 4 mL/min per 10 $cm^3$ of the firing furnace or greater than or equal to 0.3 L/min per 1 kg of the mixture.

In the washing step, the lithium-containing transition metal composite oxide is washed with water and dehydrated to obtain a cake-like composition. The lithium-containing transition metal composite oxide may be in particulate form as obtained from the synthesis step. Through washing, unreacted portions of the lithium compound added in the synthesis step, as well as impurities other than the lithium compound, can be removed. During water washing, for example, greater than or equal to 300 g and less than or equal to 5000 g of lithium-containing transition metal composite oxide may be charged per 1 L of water. Note that the water washing may be repeated a plurality of times, and the dehydration after the water washing can be performed by, for example, a filter press.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

In the addition step, at least one of the group consisting of a sulfonate compound and a sulfonic acid solution is added to the cake-like composition obtained in the washing step or the powder-like composition obtained in the drying step. Accordingly, the sulfonate compound can be adhered to the surface of the lithium-containing transition metal composite oxide. At least one of the group consisting of a sulfonate compound and a sulfonic acid solution is preferably added to the cake-like composition. The sulfonate compound added may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing transition metal composite oxide. The concentrations of the sulfonic acid solution and the sulfonate compound solution are each, for example, greater than or equal to 0.5 mass% and less than or equal to 40 mass%. Note that the

addition step may be performed during or after the washing step, or during or after the drying step, and the timing of implementation may be appropriately changed.

A metal compound including one or more metal elements selected from the group consisting of Sr, Ca, W, Zr, rare earth elements, and Al, and a non-metal compound including one or more non-metal elements selected from the group consisting of P and B, may be adhered to the surface of the lithium-containing transition metal composite oxide by adding raw materials of the metal compound and the non-metal compound at any stage selected from during or after the synthesis step, during or after the washing step, during or after the drying step, or during the addition step. Examples of Sr raw materials include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$. Examples of Ca raw materials include $Ca(OH)_2$, CaO, $CaCO_3$, $CaSO_4$, $Ca(NO_3)_2$, $CaCl_2$, and $CaAlO_4$. Examples of Zr raw materials include $Zr(OH)_4$, $ZrO_2$, $Zr(CO_3)_2$, and $Zr(SO_4)_2 \cdot 4H_2O$. Examples of rare earth raw materials include rare earth oxides, hydroxides, and carbonates. Examples of W raw materials include tungsten oxide ($WO_3$) and lithium tungstates ($Li_2WO_4$, $Li_4WO_5$, $Li_6W_2O_9$). A solution containing W may also be used as a W raw material. Examples of Al raw materials include $Al_2O_3$, $Al(OH)_3$, and $Al_2(SO_4)_3$, although Al derived from the lithium-containing transition metal composite oxide may also be used. Examples of P raw materials include $Li_{3-x}H_xPO_4$ ($0 \leq x \leq 3$). Examples of B raw materials include $H_3BO_3$, $Li_3BO_3$, and $Li_2B_4O_7$. These compounds may be pulverized to appropriately adjust the particle shape or particle diameter or may be used after adjusting the water content, including hydrates.

As described above, the positive electrode mixture layer 31 includes a conductive auxiliary agent. The conductive auxiliary agent includes at least one selected from the group consisting of carbon nanotubes (CNTs) and carbon black (CB) having an average diameter of less than or equal to 20 nm and graphene having an average thickness of less than or equal to 50 nm. The conductive auxiliary agent may include a carbon material other than the above carbon materials, and contains, as a main component, carbon nanotubes (CNTs) and carbon black (CB) having an average diameter of less than or equal to 20 nm and graphene having an average thickness of less than or equal to 50 nm. Note that the main component means a component having the largest mass proportion in the conductive auxiliary agent. Thus, even when the sulfonate compound is present on the surfaces of the positive electrode active material particles, a sufficient conductive path is formed in the positive electrode mixture layer 31. As a result, the mixture resistance of the positive electrode is reduced, resulting in improved cycle characteristics during high-rate charging.

The conductive auxiliary agent may be composed of only at least one selected from the group consisting of carbon nanotubes (CNTs) and carbon black (CB) having an average diameter of less than or equal to 20 nm and graphene having an average thickness of less than or equal to 50 nm. In this case, the effects of the present disclosure are more remarkably exhibited.

Carbon nanotubes are generally conductive carbon fibers having a tube outer diameter, the fiber diameter, of less than or equal to several tens of nanometers, and have an extremely high aspect ratio (ratio of fiber length to fiber diameter). The average aspect ratio of carbon nanotubes is, for example, greater than or equal to 20, and preferably greater than or equal to 50. With carbon nanotubes having such a high aspect ratio of greater than or equal to 20, the contact with the positive electrode active material and the positive electrode core is not a point contact but a linear contact. Accordingly, a favorable conductive path can be formed with only a small amount of addition.

The average diameter of the carbon nanotubes is less than or equal to 20 nm, preferably less than or equal to 15 nm, and more preferably less than or equal to 10 nm. As used herein, the average diameter of carbon nanotubes refers to an average fiber diameter determined by image analysis using a transmission electron microscope (TEM). Note that the fiber diameter means the length perpendicular to the fiber length direction. The lower limit of the average diameter of the carbon nanotubes is not particularly limited, but is, for example, 1 nm. The average diameter of the carbon nanotubes is determined by freely selecting 100 carbon nanotubes, measuring the fiber diameter, and arithmetically averaging the measured values.

The average fiber length of carbon nanotubes is, for example, greater than or equal to 0.5 μm, and may be greater than or equal to 1 μm. Note that the fiber length means the length when the carbon nanotubes are stretched in a straight line. If the average fiber length is greater than or equal to 0.5 μm, the conductivity of the positive electrode mixture layer 31 is further improved. The upper limit of the average fiber length of the carbon nanotubes is not particularly limited, but is, for example, 100 μm. The average fiber length of carbon nanotubes is determined by image analysis using a scanning electron microscope (SEM). The average fiber length of the carbon nanotubes is determined by freely selecting 100 carbon nanotubes, measuring the length, and arithmetically averaging the measured values. The carbon nanotubes present in the positive electrode mixture layer 31 may be present in the form of a bundle of a plurality of carbon nanotubes. In the calculation of the average fiber length, the length of a single carbon nanotube present in the bundled carbon nanotubes is used.

The carbon nanotubes may be either single-walled carbon nanotubes (SWCNTs) or multi-walled carbon nanotubes (MWCNTs), but are preferably single-walled carbon nanotubes. Furthermore, single-walled and multi-walled carbon nanotubes may be used in combination as conductive auxiliary agents. The single-walled carbon nanotubes have a structure in which a single-layer graphite sheet is formed into a tube shape, and the multi-walled carbon nanotubes have a structure in which a multilayer graphite sheet is formed into a tube shape. One example of a multi-walled carbon

nanotube is a double-walled carbon nanotube having a double-layer structure.

The preferred BET specific surface area of carbon nanotubes varies slightly depending on the type of carbon nanotubes, but is, for example, greater than or equal to 200 $m^2/g$, more preferably greater than or equal to 250 $m^2/g$. The upper limit of the BET specific surface area is not particularly limited, but is, for example, 2000 $m^2/g$. The BET specific surface area is measured according to the BET method (nitrogen-adsorption method) described in JIS R1626.

The average diameter of the carbon black is less than or equal to 20 nm, preferably less than or equal to 15 nm. As used herein, the average diameter of carbon black refers to an average particle diameter determined by image analysis using a transmission electron microscope (TEM). Generally, carbon black is composed of the smallest particles, also referred to as domains, primary aggregates formed by the aggregation of these smallest particles, and secondary aggregates formed by the aggregation of primary aggregates. As used herein, the primary aggregates are also referred to as aggregates, and the secondary aggregates are also referred to as agglomerates. The lower limit of the average diameter of the carbon black is not particularly limited, but is, for example, 1 nm.

The aspect ratio (ratio of long diameter to short diameter) of carbon black is, for example, greater than or equal to 1.2 and less than or equal to 2.5, or greater than or equal to 1.3 and less than or equal to 2. Note that the aspect ratio of carbon black refers to the aspect ratio of the above-mentioned primary aggregates. Carbon black having a high aspect ratio of greater than or equal to 1.2 enables the formation of favorable conductive paths with a small amount of addition.

Carbon black may be referred to by different names depending on the difference in the production method thereof, and specific examples thereof include acetylene black produced by an acetylene method, furnace black produced by a furnace method, and channel black produced by a channel method. When the average particle diameter of carbon black is less than or equal to 20 nm, the effect of the present application is exhibited regardless of the production method, but carbon black having a small impurity content and high conductivity is more preferred.

The average thickness of the graphene is less than or equal to 50 nm, preferably less than or equal to 30 nm, and more preferably less than or equal to 20 nm. The thickness of the graphene is determined by image analysis using a transmission electron microscope (TEM). The average thickness of the graphene is determined by freely selecting 100 pieces of graphene, measuring the thickness, and arithmetically averaging the measured values.

The in-plane size of the graphene is, for example, a long diameter of greater than or equal to 0.5 μm, preferably greater than or equal to 1.0 μm. In this case, the conductivity of the positive electrode mixture layer 31 can be easily improved. Note that the in-plane size refers to the average of the longest diameter and the shortest diameter of the graphene surface. The upper limit of the in-plane size of the graphene is not particularly limited, but is, for example, 100 μm. The in-plane size of the graphene is determined by image analysis using a scanning electron microscope (SEM). The in-plane size is determined by freely selecting 100 pieces of graphene, measuring the length, and arithmetically averaging the measured values. The aspect ratio of the graphene (ratio of the long diameter of the in-plane graphene to the thickness of the graphene) is preferably greater than or equal to 10.

The content of the conductive auxiliary agent is preferably less than or equal to 2.0 mass%, and more preferably less than or equal to 1.0 mass%, relative to the total mass of the positive electrode active material. Even in small amounts, the conductive auxiliary agent forms a good conductive path in the positive electrode mixture layer 31, but the lower limit of the content of the conductive auxiliary agent is preferably 0.01 mass%. Therefore, an example of the content of a preferred conductive auxiliary agent is greater than or equal to 0.01 mass% and less than or equal to 2.0 mass%, and more preferably greater than or equal to 0.01 mass% and less than or equal to 1.0 mass%, relative to the total mass of the positive electrode active material.

The conductive auxiliary agent may be supplied to a production process of the positive electrode 11 in the form of a conductive auxiliary agent dispersion, which is obtained by mixing and dispersing the conductive auxiliary agent in a liquid including a dispersant and a non-protic polar solvent (dispersion medium), and added to the positive electrode mixture slurry. Alternatively, both the conductive auxiliary agent and the dispersant may be supplied to the positive electrode mixture slurry in a solid state. Furthermore, either or both of the conductive auxiliary agent and the dispersant may be supplied to the positive electrode mixture slurry in a liquid state. The conductive auxiliary agent and the dispersant may be supplied individually or in a mixed form. When supplied in the form of a dispersion, the dispersant is dissolved in a polar solvent, and the conductive auxiliary agent is dispersed in the polar solvent through the action of the dispersant. The solid content concentration of the dispersion (i.e., the conductive auxiliary agent and the dispersant) is, for example, greater than or equal to 1 mass% and less than or equal to 20 mass%, but is not particularly limited thereto. The conductive auxiliary agent dispersion may also be added to the positive electrode mixture slurry in the form of a mixed liquid in which a binder has been pre-mixed. In such a case, the binder may be in either a solid or liquid state.

The dispersant may include, for example, nitrile group-containing rubber. The nitrile group-containing rubber is a copolymer of monomers including an unsaturated nitrile and a conjugated diene as raw materials, and may be a copolymer substantially consisting of an unsaturated nitrile and a conjugated diene. The molar ratio of the unsaturated nitrile to the conjugated diene is, for example, greater than or equal to 10:90 and less than or equal to 70:30. The weight-average molecular weight of the nitrile group-containing rubber is not particularly limited, but is, for example, greater than or equal to 5,000 and less than or equal to 500,000. At least a portion of the dispersant may also function as a binder in the positive

electrode mixture layer 31.

The nitrile group-containing rubber may be hydrogenated nitrile rubber. The hydrogenated nitrile rubber includes, for example, a structural unit derived from an unsaturated nitrile, a structural unit derived from a conjugated diene, and a structural unit derived from a hydrogenated conjugated diene. An example of a preferred hydrogenated nitrile rubber is partially hydrogenated nitrile rubber in which greater than or equal to 80 mol% of the structural unit derived from the conjugated diene is hydrogenated. An example of the unsaturated nitrile is acrylonitrile or methacrylonitrile, preferably acrylonitrile. An example of the conjugated diene is a conjugated diene having greater than or equal to 3 and less than or equal to 6 carbon atoms, preferably butadiene.

The nitrile group-containing rubber is preferably contained in an amount of greater than or equal to 5 mass% and less than or equal to 1000 mass% relative to the total mass of the conductive auxiliary agent. The dispersion of the conductive auxiliary agent may include only the nitrile group-containing rubber as the dispersant, or another dispersant may be used in combination. The mass proportion of the nitrile group-containing rubber in the dispersant is preferably greater than or equal to 20 mass%, and more preferably greater than or equal to 30 mass%. Examples of the other dispersant used in combination with the nitrile group-containing rubber include polyvinyl alcohol, polyvinylpyrrolidone (PVP), polyalkylene oxide, polyvinyl acetal, polyvinyl ether, cellulose or derivatives thereof, chitins, chitosans, starches, and derivatives thereof. Among them, PVP or derivatives thereof (PVPs) are preferably used.

A non-protic polar solvent is used as the dispersion medium. The non-protic polar solvent may be any solvent capable of dissolving the dispersant and dispersing the conductive auxiliary agent. Since the dispersion is added to the positive electrode mixture slurry, the polar solvent is preferably miscible with the solvent of the positive electrode mixture slurry, and may be of the same type as the solvent of the positive electrode mixture slurry. Examples of the non-protic polar solvent include N-methyl-2-pyrrolidone (NMP), methyl ethyl ketone, tetrahydrofuran, dimethylformamide, acetone, ethyl acetate, and dimethyl sulfoxide. Among them, NMP is preferably used.

The positive electrode mixture layer 31 may also include a binder. Examples of the binder include fluorine-containing polymers such as polytetrafluoroethylene (PTFE) and polyvinylidene fluoride (PVDF), polyacrylonitrile (PAN), polyimide, acrylic resin, and polyolefin. These resins may also be used in combination with cellulose or a derivative thereof, polyethylene oxide (PEO), or the like. The content of the binder is, for example, greater than or equal to 0.1 mass% and less than or equal to 2 mass%, and preferably 0.5 mass% or more and 1.5 mass% or less, relative to the total mass of the positive electrode active material.

[Negative Electrode]

The negative electrode 12 may have, for example, a negative electrode core 40 and a negative electrode mixture layer 41 formed on the surface of the negative electrode core 40, or a metal Li foil may be used as the negative electrode 12. The negative electrode 12 may have a negative electrode core 40, and lithium metal may be deposited on the surface of the negative electrode core 40 by charging. When the negative electrode 12 has a negative electrode mixture layer 41, the negative electrode mixture layer 41 is preferably formed on both the surfaces of the negative electrode core 40. As the negative electrode core 40, a foil of a metal that is stable in the potential range of the negative electrode 12, such as copper or a copper alloy, or a film with the metal disposed on the surface layer, or the like can be used. The thickness of the negative electrode core 40 is, for example, greater than or equal to 5 μm and less than or equal to 30 μm.

The negative electrode mixture layer 41 includes, for example, a negative electrode active material and a binder. The thickness of the negative electrode mixture layer 41 is, for example, greater than or equal to 10 μm and less than or equal to 150 μm on one side of the negative electrode core 40. The negative electrode 12 can be produced, for example, by coating a negative electrode mixture slurry including a negative electrode active material and a binder on the surface of the negative electrode core 40, drying the coating, and rolling the dried coating to form the negative electrode mixture layer on both the surfaces of the negative electrode core.

As the negative electrode active material included in the negative electrode mixture layer 41, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer 41 include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid

molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples and Comparative Examples, but the present disclosure is not limited to Examples below.

### <Example 1>

#### [Production of Positive Electrode Active Material]

A composite hydroxide represented by $[Ni_{0.90}Co_{0.05}Al_{0.05}](OH)_2$ obtained by a coprecipitation method was fired at 500°C for 8 hours to obtain a metal oxide including Ni, Co, and Al. Then, lithium hydroxide monohydrate ($LiOH \cdot H_2O$) was mixed so that the molar ratio of Li to the total amount of Ni, Co, and Al was 1:1.03 to obtain a mixture. Then, under an oxygen stream at an oxygen concentration of 95% (flow rate of 2 mL/min per 10 $cm^3$ and 5 L/min per kg of mixture), the mixture was heated from room temperature to 650°C at a temperature rising rate of 2.0°C/min, followed by firing, heated from 650°C to 740°C at a temperature rising rate of 0.5°C/min, and fired to obtain a lithium-containing transition metal composite oxide (synthesis step).

Water was added to the obtained lithium-containing transition metal composite oxide so that the slurry concentration was 1500 g/L, and the mixture was stirred for 15 minutes and filtered to obtain a cake-like composition (washing step). Then, the obtained cake-like composition was dried under a vacuum atmosphere at 180°C for 2 hours to obtain a powder-like composition (drying step). Thereafter, powdered lithium methanesulfonate was added to the obtained powder-like composition (addition step). Note that lithium methanesulfonate was added so that the content of lithium methanesulfonate was 0.5 mass% relative to the total mass of the lithium-containing transition metal composite oxide to obtain a positive electrode active material of Example 1. It was confirmed by Fourier transform infrared spectroscopy (FT-IR) that lithium methanesulfonate was present on the surfaces of the secondary particles of the lithium-containing transition metal composite oxide.

#### [Preparation of Conductive Auxiliary Agent Dispersion]

Carbon black (first carbon black) having an average diameter (average particle diameter) of 19 nm and an average aspect ratio of 1.7 was used as a conductive auxiliary agent, and polyvinylpyrrolidone (PVP) was used as a dispersant. Then, a powder obtained by dry-blending a conductive auxiliary agent and a dispersant at a mass ratio of 10:1 was added to N-methyl-2-pyrrolidone (NMP), and the mixture was dispersed using a ball mill to obtain a conductive auxiliary agent dispersion in which the content of the first carbon black was 10 mass%.

#### [Production of Positive Electrode]

As the positive electrode active material, the lithium-containing transition metal composite oxide was used. Then, the positive electrode active material, the conductive auxiliary agent dispersion, and polyvinylidene fluoride (PVDF) were mixed at a solid content mass ratio of 100:1:1, excluding the dispersant, to prepare a positive electrode mixture slurry using

N-methyl-2-pyrrolidone (NMP) as the dispersion medium. Next, the positive electrode mixture slurry was applied to both surfaces of a positive electrode core made of aluminum foil so that the basis weight was 240 g/$m^2$, the coating was dried, and the dried coating was then rolled using a roller and cut into a predetermined electrode size to obtain a positive electrode in which a positive electrode mixture layer was formed on both the surfaces of the positive electrode core. Then, an exposed portion, in which the surface of the positive electrode core was exposed, was provided in a part of the positive electrode. The mixture resistance of the prepared positive electrode can be measured using an electrode resistance measurement system (manufactured by HIOKI E.E. Corporation, RM2610).

[Production of Negative Electrode]

As negative electrode active materials, natural graphite and a silicon compound were used. Natural graphite, a silicon compound, sodium carboxymethylcellulose (CMC-Na), and a dispersion of styrene-butadiene rubber (SBR) were mixed at a solid content mass ratio of 95:5:1:1, and water was used as a dispersion medium to prepare a negative electrode mixture slurry. The negative electrode mixture slurry was applied to both surfaces of a negative electrode core made of copper foil, the coating was dried, then rolled using a roller, and cut to a predetermined electrode size to obtain a negative electrode in which a negative electrode mixture layer was formed on both the surfaces of the negative electrode core. Note that an exposed portion, in which the surface of the negative electrode core was exposed, was provided in a part of the negative electrode.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell (Non-Aqueous Electrolyte Secondary Battery)]

An aluminum lead was attached to the exposed portion of the positive electrode, a nickel lead was attached to the exposed portion of the negative electrode, and the positive electrode and the negative electrode were spirally wound via a separator made of a polyolefin to produce a wound electrode assembly. This electrode assembly was housed in a bottomed cylindrical exterior housing can, the non-aqueous electrolyte solution was injected therein, and then an opening portion of the exterior housing can was closed off by a sealing assembly to obtain a test cell.

[Evaluation of Output Characteristics]

The test cell was charged to 4.2 V at a constant current of 0.2 C under a temperature environment of 25°C and then charged at a constant voltage of 4.2 V until the current value was equivalent to 0.01 C. After a pause of 1 hour, the test cell was discharged to 2.5 V at a constant current of 0.2 C, thereby completing the initial cycle. Next, the test cell was again charged at a constant current of 0.2 C until the battery voltage reached 4.2 V, charged at a constant voltage of 4.2 V until the current value reached 0.01 C, and then discharged to 2.5 V at 1 C. After a pause of 10 minutes as it was, the test cell was further discharged to 2.5 V at 0.02 C, and the initial output was determined using the following equation.

Initial output = 1 C discharge capacity/(1 C discharge capacity + 0.02 C discharge capacity)

[Evaluation of Cycle Characteristics During High-Rate Charging]

The test cell was charged to 4.2 V at a constant current of 1 C under a temperature environment of 25°C and then charged at a constant voltage of 4.2 V until the current value was equivalent to 0.01 C. After a pause of 1 hour, the test cell was discharged to 2.5 V at a constant current of 1 C, which was defined as one cycle, and the discharge capacity at 1 C after 200 cycles was measured. The capacity retention rate during high-rate charging was determined using the following equation.

Capacity retention rate = 1 C discharge capacity at 200th cycle/1 C discharge capacity at 1st cycle

<Example 2>

A test cell was produced in the same manner as Example 1, except that multi-walled carbon nanotubes (first carbon nanotubes) having an average diameter (average fiber diameter) of 12 nm, an average fiber length of 1 μm, an

average aspect ratio of 83, and a BET specific surface area of 220 $m^2/g$ were used instead of the first carbon black as the conductive auxiliary agent of the positive electrode in the preparation of the conductive auxiliary agent dispersion, and the solid content of the first carbon nanotubes was adjusted to 0.5 mass% relative to the total mass of the positive electrode active material.

<Example 3>

A test cell was produced in the same manner as in Example 1, except that in the preparation of the conductive auxiliary agent dispersion, a conductive auxiliary agent obtained by mixing the first carbon nanotubes and graphene at a mass ratio of 1:1 was used instead of the first carbon black as the conductive auxiliary agent of the positive electrode, and the solid content of the first carbon nanotubes and graphene was adjusted to 0.5 mass% relative to the total mass of the positive electrode active material. The average thickness of the graphene was 50 nm, and the in-plane size was 1 μm.

<Example 4>

A test cell was produced in the same manner as in Example 1, except that hydrogenated nitrile rubber (H-NBR), a hydrogen-substituted copolymer of acrylonitrile and butadiene, was used instead of polyvinylpyrrolidone (PVP) as the dispersant in the preparation of the conductive auxiliary agent dispersion.

<Example 5>

A test cell was produced in the same manner as in Example 2, except that hydrogenated nitrile rubber (H-NBR), a hydrogen-substituted copolymer of acrylonitrile and butadiene, was used instead of polyvinylpyrrolidone (PVP) as the dispersant in the preparation of the conductive auxiliary agent dispersion.

<Example 6>

A test cell was produced in the same manner as in Example 2, except that nitrile-butadiene rubber (NBR) was used instead of polyvinylpyrrolidone (PVP) as the dispersant in the preparation of the conductive auxiliary agent dispersion.

<Example 7>

A test cell was produced in the same manner as in Example 2, except that in the preparation of the conductive auxiliary agent dispersion, the solid content of the first carbon nanotubes was adjusted to 1.2 mass% relative to the total mass of the positive electrode active material, and hydrogenated nitrile rubber (H-NBR), a hydrogen-substituted copolymer of acrylonitrile and butadiene, was used instead of polyvinylpyrrolidone (PVP) as the dispersant.

<Example 8>

A test cell was produced in the same manner as in Example 1, except that hydrogenated nitrile rubber (H-NBR), a hydrogen-substituted copolymer of acrylonitrile and butadiene, was used instead of polyvinylpyrrolidone (PVP) as the dispersant in the preparation of the conductive auxiliary agent dispersion, and the dispersion was applied so that the basis weight was 270 $g/m^2$ in the production of the positive electrode.

<Example 9>

A test cell was produced in the same manner as in Example 2, except that hydrogenated nitrile rubber (H-NBR), a hydrogen-substituted copolymer of acrylonitrile and butadiene, was used instead of polyvinylpyrrolidone (PVP) as the dispersant in the preparation of the conductive auxiliary agent dispersion, and the dispersion was applied so that the basis weight was 270 $g/m^2$ in the production of the positive electrode.

<Example 10>

A test cell was produced in the same manner as in Example 4, except that single-walled carbon nanotubes (second carbon nanotubes) having an average diameter (average fiber diameter) of 2 nm, an average fiber length of 1 μm, an average aspect ratio of 500, and a BET specific surface area of 800 $m^2/g$ were used instead of the first carbon black as the conductive auxiliary agent of the positive electrode in the preparation of the conductive auxiliary agent dispersion to

adjust the solid content of the second carbon nanotubes to 0.1 mass% relative to the total mass of the positive electrode active material and the solid content of the dispersant to 0.4 mass% relative to the total mass of the positive electrode active material.

<Example 11>

A test cell was produced in the same manner as in Example 4, except that in the preparation of the conductive auxiliary agent dispersion, a conductive auxiliary agent obtained by mixing the first carbon nanotubes, multi-walled carbon nanotubes, and the second carbon nanotubes, single-walled carbon nanotubes, at a mass ratio of 95:5 was used instead of the first carbon black as the conductive auxiliary agent of the positive electrode to adjust the solid contents of the first carbon nanotubes and the second carbon nanotubes to 0.4 mass% relative to the total mass of the positive electrode active material. The average diameter (average fiber diameter) of the conductive auxiliary agent was 12 nm.

<Comparative Example 1>

A test cell was produced in the same manner as in Example 1, except that the addition step was omitted in the production of the positive electrode active material, and carbon black having an average diameter (average particle diameter) of 30 nm and an average aspect ratio of 1.5 times (second carbon black) was used instead of the first carbon black as the conductive auxiliary agent of the positive electrode in the preparation of the conductive auxiliary agent dispersion.

<Comparative Example 2>

A test cell was produced in the same manner as in Example 1, except that the second carbon black was used instead of the first carbon black as the conductive auxiliary agent of the positive electrode in the preparation of the conductive auxiliary agent dispersion.

<Comparative Example 3>

A test cell was produced in the same manner as in Example 1, except that the second carbon black was used instead of the first carbon black as the conductive auxiliary agent of the positive electrode in the preparation of the conductive auxiliary agent dispersion, and the dispersion was applied so that the basis weight was 270 $g/m^2$ in the production of the positive electrode.

<Comparative Example 4>

A test cell was produced in the same manner as in Example 1, except that the addition step was omitted in the production of the positive electrode active material.

Table 1 shows the mixture resistance, initial output, and capacity retention rate of the test cells in Examples 1 to 11 and Comparative Examples 1 to 4. The mixture resistance, initial output, and capacity retention rate of the test cells in Examples 1 to 11 and Comparative Examples 1 to 4 shown in Table 1 were expressed relatively, taking the mixture resistance, initial output, and capacity retention rate of the test cell in Comparative Example 1 as 100. A smaller value of the mixture resistance means a lower resistance, a larger value of the initial output means better output characteristics, and a larger value of the capacity retention rate means better cycle characteristics during high-rate charging.

[Table 1]

| | Positive electrode | | | | | | | | Evaluation result | |
|---|---|---|---|---|---|---|---|---|---|---|
| | Sulfonate compound | Conductive auxiliary agent | | | | Dispersant | Basis weight [g/m$^2$] | Mixture resistance (relative value) | Initial output (relative value) | Capacity retention rate (relative value) |
| | Type | Type | Average diameter [nm] | Average thickness [nm] | Content [mass%] | | | | | |
| Example 1 | Li methanesulfonate | First carbon black | 19 | - | 1 | PVP | 240 | 95 | 101.5 | 115 |
| Example 2 | Li methanesulfonate | First carbon nanotube | 12 | - | 0.5 | PVP | 240 | 89 | 101.7 | 120 |
| Example 3 | Li methanesulfonate | First carbon nanotube + graphene | 12 | 50 | 0.5 | PVP | 240 | 89 | 101.6 | 125 |
| Example 4 | Li methanesulfonate | First carbon black | 19 | - | 1 | H-NBR | 240 | 95 | 101.7 | 130 |
| Example 5 | Li methanesulfonate | First carbon nanotube | 12 | - | 0.5 | H-NBR | 240 | 80 | 102.0 | 135 |
| Example 6 | Li methanesulfonate | First carbon nanotube | 12 | - | 0.5 | NBR | 240 | 87 | 102.1 | 130 |
| Example 7 | Li methanesulfonate | First carbon nanotube | 12 | - | 1.2 | H-NBR | 240 | 80 | 101.9 | 135 |
| Example 8 | Li methanesulfonate | First carbon black | 19 | - | 1 | H-NBR | 270 | 94 | 101.5 | 140 |
| Example 9 | Li methanesulfonate | First carbon nanotube | 12 | - | 0.5 | H-NBR | 270 | 81 | 101.8 | 145 |
| Example 10 | Li methanesulfonate | Second carbon nanotube | 2 | - | 0.1 | H-NBR | 270 | 75 | 102.0 | 147 |
| Example 11 | Li methanesulfonate | First carbon nanotube + second carbon nanotube | 12 | - | 0.4 | H-NBR | 270 | 72 | 102.1 | 150 |
| Comparative Example 1 | - | Second carbon black | 30 | - | 1 | PVP | 240 | 100 | 100 | 100 |

(continued)

| | Positive electrode | | | | | | | | Evaluation result | |
|---|---|---|---|---|---|---|---|---|---|---|
| | Sulfonate compound | Conductive auxiliary agent | | | | Dispersant | Basis weight [g/m$^2$] | Mixture resistance (relative value) | Initial output (relative value) | Capacity retention rate (relative value) |
| | Type | Type | Average diameter [nm] | Average thickness [nm] | Content [mass%] | | | | | |
| Comparative Example 2 | Li methanesulfonate | Second carbon black | 30 | - | 1 | PVP | 240 | 140 | 101.3 | 85 |
| Comparative Example 3 | Li methanesulfonate | Second carbon black | 30 | - | 1 | PVP | 270 | 141 | 100.5 | 87 |
| Comparative Example 4 | - | Second carbon black | 19 | - | 1 | PVP | 240 | 96 | 99.8 | 112 |

As shown in Table 1, the test cells in Examples have improved initial output and capacity retention rate as compared with the test cells in Comparative Examples. That is, when the sulfonate compound is present on the surfaces of the particles of the lithium-containing transition metal composite oxide and a conductive auxiliary agent including at least one selected from the group consisting of carbon nanotubes and carbon black having an average diameter of less than or equal to 20 nm and graphene having an average thickness of less than or equal to 50 nm is used, it is possible to improve output characteristics and cycle characteristics during high-rate charging.

In addition, the test cell of Comparative Example 2, in which carbon black having an average diameter of more than 20 nm was used as the conductive auxiliary agent while a sulfonate compound was present on the particle surface, had improved initial output but no improved capacity retention rate as compared with the test cell in Comparative Example 1, presumably because the presence of the sulfonate compound on the particle surfaces reduced the electronic conductivity of the lithium-containing transition metal composite oxide, resulting in insufficient formation of conductive paths in the positive electrode mixture layer when using the carbon black having an average diameter of more than 20 nm as the conductive auxiliary agent.

The test cell in Example 4, in which carbon black having an average diameter of less than or equal to 20 nm was used as the conductive auxiliary agent and H-NBR was used as the dispersant, had a significantly higher capacity retention rate than the test cell in Example 1, in which PVP was used as the dispersant, presumably because the use of H-NBR as the dispersant allowed the conductive auxiliary agent to be more uniformly dispersed and further improved the conductivity of the positive electrode mixture layer even when the sulfonate compound was present on the particle surfaces.

The present disclosure will be further described with reference to embodiments below.

Constitution 1: A positive electrode for a non-aqueous electrolyte secondary battery, having:

a positive electrode core; and
a positive electrode mixture layer formed on a surface of the positive electrode core, wherein
the positive electrode mixture layer includes a positive electrode active material and a conductive auxiliary agent,
the positive electrode active material includes a lithium-containing transition metal composite oxide having a layered structure, and a sulfonate compound present on surfaces of particles of the lithium-containing transition metal composite oxide,
the sulfonate compound is a compound represented by formula (1), and
the conductive auxiliary agent includes at least one selected from the group consisting of carbon nanotubes and carbon black having an average diameter of less than or equal to 20 nm and graphene having an average thickness of less than or equal to 50 nm,

[Formula 3]

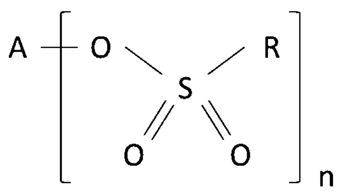

(I)

wherein A represents a group I or group II element, R represents a hydrocarbon group, and n represents 1 or 2.

Constitution 2: The positive electrode for a non-aqueous electrolyte secondary battery according to Constitution 1, wherein the lithium-containing transition metal composite oxide contains greater than or equal to 50 mol% of Ni relative to a total molar amount of metal elements excluding Li, and one or more elements selected from the group consisting of Co, Mn, and Al.

Constitution 3: The positive electrode for a non-aqueous electrolyte secondary battery according to Constitution 1 or 2, further including nitrile group-containing rubber as a dispersant for the conductive auxiliary agent.

Constitution 4: The positive electrode for a non-aqueous electrolyte secondary battery according to any one of Constitutions 1 to 3, wherein a content of the conductive auxiliary agent is greater than or equal to 0.01 mass% and less than or equal to 2 mass% relative to a total mass of the positive electrode active material.

Constitution 5: The positive electrode for a non-aqueous electrolyte secondary battery according to any one of Constitutions 1 to 4, wherein the carbon nanotubes are single-walled carbon nanotubes.

Constitution 6: The positive electrode for a non-aqueous electrolyte secondary battery according to any one of Constitutions 1 to 5, wherein a basis weight of the positive electrode mixture layer is greater than or equal to 250 $g/m^2$.

Constitution 7: A non-aqueous electrolyte secondary battery, comprising:

the positive electrode according to any one of Constitutions 1 to 6;
a negative electrode; and
a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A positive electrode for a non-aqueous electrolyte secondary battery, having:

   a positive electrode core; and
   a positive electrode mixture layer formed on a surface of the positive electrode core, wherein
   the positive electrode mixture layer includes a positive electrode active material and a conductive auxiliary agent,
   the positive electrode active material includes a lithium-containing transition metal composite oxide having a layered structure, and a sulfonate compound present on surfaces of particles of the lithium-containing transition metal composite oxide,
   the sulfonate compound is a compound represented by formula (1), and
   the conductive auxiliary agent includes at least one selected from the group consisting of carbon nanotubes, carbon black and graphene, the carbon nanotubes and carbon black each having an average diameter of less than or equal to 20 nm and the graphene having an average thickness of less than or equal to 50 nm,

   [Formula 1]

   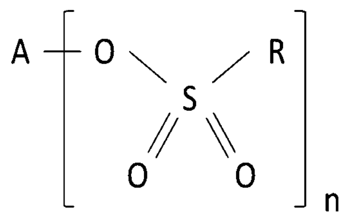

   (I)

   wherein A represents a group I or group II element, R represents a hydrocarbon group, and n represents 1 or 2.

2. The positive electrode for a non-aqueous electrolyte secondary battery according to claim 1, wherein the lithium-containing transition metal composite oxide contains greater than or equal to 50 mol% of Ni relative to a total molar amount of metal elements excluding Li, and one or more elements selected from the group consisting of Co, Mn, and Al.

3. The positive electrode for a non-aqueous electrolyte secondary battery according to claim 1, further including nitrile group-containing rubber as a dispersant for the conductive auxiliary agent.

4. The positive electrode for a non-aqueous electrolyte secondary battery according to claim 1, wherein a content of the conductive auxiliary agent is greater than or equal to 0.01 mass% and less than or equal to 2 mass% relative to a total mass of the positive electrode active material.

5. The positive electrode for a non-aqueous electrolyte secondary battery according to claim 1, wherein the carbon nanotubes are single-walled carbon nanotubes.

6. The positive electrode for a non-aqueous electrolyte secondary battery according to claim 1, wherein a basis weight of the positive electrode mixture layer is greater than or equal to 250 $g/m^2$.

**7.** A non-aqueous electrolyte secondary battery, comprising:

the positive electrode according to any one of claims 1 to 6;
a negative electrode; and
a non-aqueous electrolyte.

# Figure 1

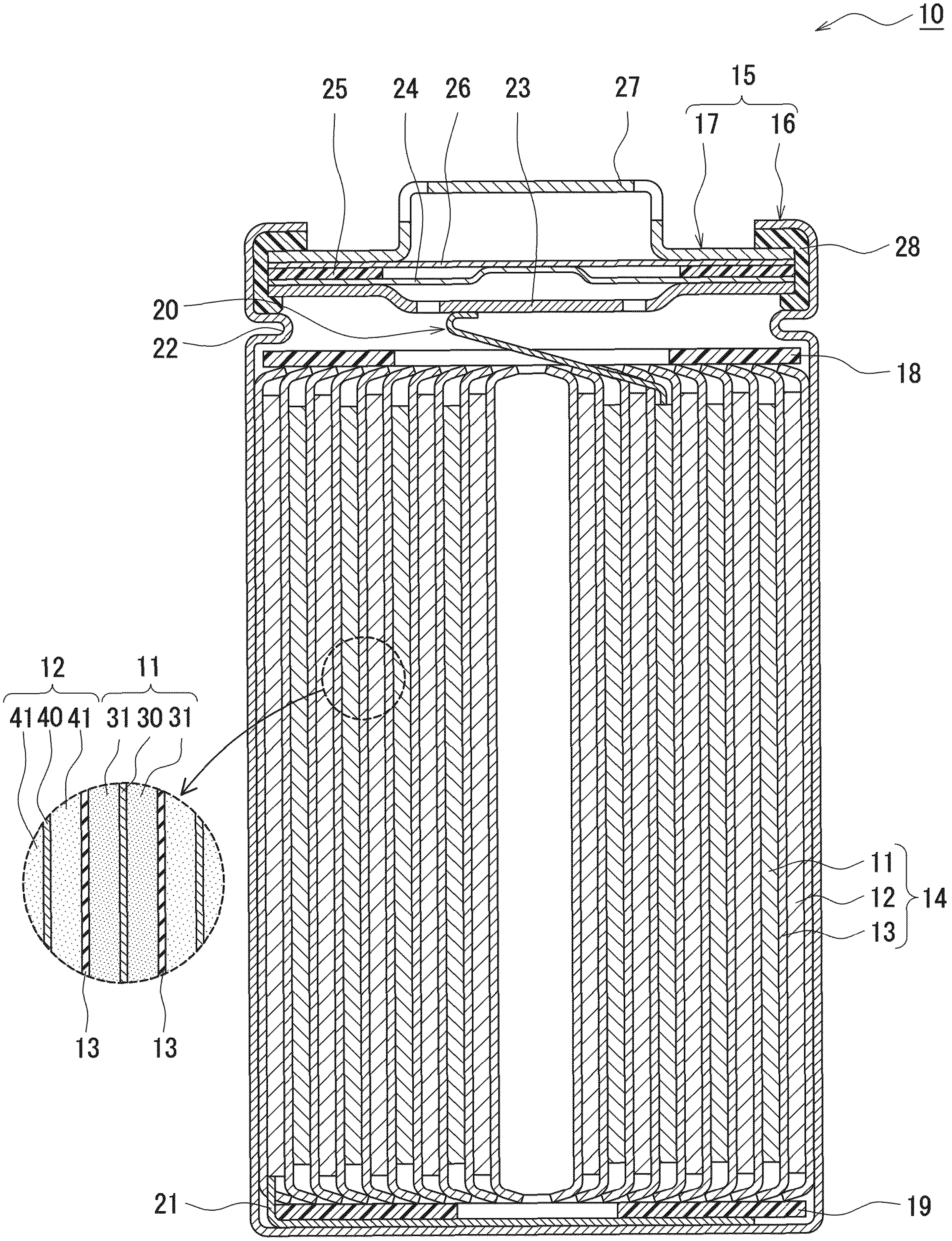
10
25
24
26
23
27
15
17
16
28
20
22
18
12
11
41 40 41
31 30 31
13
13
11
12
13
14
21
19

## INTERNATIONAL SEARCH REPORT

International application No.
**PCT/JP2024/017560**

### A. CLASSIFICATION OF SUBJECT MATTER

***H01M 4/131***(2010.01)i; ***H01M 4/36***(2006.01)i; ***H01M 4/505***(2010.01)i; ***H01M 4/525***(2010.01)i; ***H01M 4/62***(2006.01)i
FI: H01M4/131; H01M4/62 Z; H01M4/525; H01M4/505; H01M4/36 C

According to International Patent Classification (IPC) or to both national classification and IPC

### B. FIELDS SEARCHED

Minimum documentation searched (classification system followed by classification symbols)

H01M4/131; H01M4/36; H01M4/505; H01M4/525; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-134218 A (NEC CORPORATION) 25 July 2016 (2016-07-25) claims, paragraphs [0034]-[0046] | 1-7 |
| A | WO 2015/146857 A1 (NISSAN MOTOR CO., LTD.) 01 October 2015 (2015-10-01) claims, paragraphs [0090]-[0129] | 1-7 |
| A | WO 2018/146865 A1 (MURATA MANUFACTURING CO., LTD.) 16 August 2018 (2018-08-16) claims, paragraph [0211] | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017560**

| Patent document cited in search report | Publication date (day/month/year) | Patent family member(s) | Publication date (day/month/year) |
|---|---|---|---|
| JP 2016-134218 A | 25 July 2016 | (Family: none) | |
| WO 2015/146857 A1 | 01 October 2015 | US 2017/0117583 A1<br>claims, paragraphs [0120]-[0151]<br>EP 3125339 A1<br>CN 106165160 A<br>KR 10-2016-0128355 A | |
| WO 2018/146865 A1 | 16 August 2018 | US 2020/0058941 A1<br>claims, paragraph [0233]<br>CN 110521029 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019169286 A